Europäisches Patentamt

European Patent Office

Office européen des brevets

(11) Veröffentlichungsnummer: **0 484 643 A1**

## (12) EUROPÄISCHE PATENTANMELDUNG

(21) Anmeldenummer: **91114494.7**

(22) Anmeldetag: **29.08.91**

(51) Int. Cl.[5]: **C03C 11/00**, C03C 1/00

(30) Priorität: **05.11.90 DE 4035127**
**04.12.90 DE 4038637**

(43) Veröffentlichungstag der Anmeldung:
**13.05.92 Patentblatt 92/20**

(84) Benannte Vertragsstaaten:
**AT BE CH DE DK ES FR GB GR IT LI LU NL SE**

(71) Anmelder: **Dennert Poraver GmbH**

**W-8439 Postbauer-Heng(DE)**

(72) Erfinder: **Dennert, Hans Veit**
**Mozartweg 1**
**W-8602 Schlüsselfeld(DE)**

(74) Vertreter: **Tergau, Enno, Dipl.-Ing. et al**
**Tergau & Pohl Patentanwälte Hefnersplatz 3**
**Postfach 119347**
**W-8500 Nürnberg 11(DE)**

(54) Verwendung bestimmter Altglas-Sorten für die Herstellung von Schaumglas-Formkörpern.

(57) Es wird ein Verfahren zum Herstellen von Schaumglas-Formkörpern aus zerkleinertem Altglas unter Zusatz von wenigstens einem Treibmittel, Formen der Masse und Verschäumen bei erhöhter Temperatur vorgeschlagen, welches dadurch gekennzeichnet ist, daß als Altglas ganz oder teilweise das zerkleinerte Glas von Entladungslampen, insbesondere Leuchtstoffröhrenglas, eingesetzt wird. Die Gemischkomponenten sollen so aufeinander abgestimmt werden, daß der Gesamtgehalt an Alkalioxid 14 bis 25 Gew% beträgt. Vorteilhaft ist ein Glas oder eine Glasmischung mit folgender Zusammensetzung:

| | |
|---|---|
| $SiO_2$ | 70 bis 75 Gew% |
| $Al_2O_3$ | 1 bis 2 Gew% |
| CaO | 3 bis 6 Gew% |
| MgO | 2 bis 4 Gew% |
| BaO | bis 1,0 Gew% |
| $Na_2O$ | 14 bis 16 Gew% |
| $K_2O$ | 0,5 bis 1,5 Gew% |
| Sonstiges | bis 0,5 Gew% |

mit der Maßgabe, daß die Summe aller Bestandteile 100 Gew% beträgt.

Rank Xerox (UK) Business Services
(-/2.18/2.0)

Die Erfindung betrifft ein Verfahren zum Herstellen von Schaumglas-Formkörpern aus zerkleinertem Altglas unter Zusatz von wenigstens einem Treibmittel, Formen der Masse und Verschäumen bei erhöhter Temperatur.

Derartige Verfahren sind grundsätzlich bekannt. Es kann dabei so vorgegangen werden, daß das zerkleinerte Altglas mit einem geeigneten Treibmittel, beispielsweise Kalkstein (Kalziumkarbonat) vermischt und mit Wasser auf einem Granulierteller granuliert wird. Das Granulat wird alsdann getrocknet und anschließend auf erhöhte Temperatur erhitzt, wobei das Kalziumkarbonat unter Abgabe von $CO_2$ zerfällt und das Altglas unter Aufnahme des aus den Treibmitteln verbleibenden CaO zu Schaumgranulat zusammensintert.

Andere Verfahren zur Herstellung von Schaumglasgranulat sind beispielsweise aus den europäischen Patentschriften 0 052 693 und 0 170 978 bekannt. Bei diesen Verfahren wird das zerkleinerte Altglas mit Alkalisilikat und Wasser sowie unter Zusatz wenigstens eines Treibmittels angeteigt. Auch diese Masse wird geformt, beispielsweise granuliert, und bei erhöhter Temperatur verschäumt. Unter "Schaumglas-Formkörpern" werden in beiden Fällen dabei sowohl Granulate beliebiger Körnung wie auch Platten, Blöcke und ähnliche Körper verstanden.

Schaumglas-Formkörper haben technisch ein weites Anwendungsfeld. Sie werden u.a. in der Bauindustrie als feuersicheres Wärmeisolationsmittel verwendet. Außerdem finden sie Einsatz bei der Abwasserreinigung als Trägersubstanz für Mikroorganismen, des weiteren auch in der Garten- und Ackerbautechnik als Auflockerungsmittel für schwere Böden. Eine der jüngsten Anwendungen ist der Zusatz von Schaumglas-Granulat zu Leichtbeton, Leichtputz und Leichtmauermörtel, wobei das Schaumglas-Granulat den sonst üblichen Zuschlag von Natursand ganz oder doch weitgehend ersetzt.

Wesentliche technische Parameter von Schaumglas-Formkörpern, insbesondere von Schaumglas-Granulat sind deren Schüttdichte sowie deren Kornfestigkeit. Die Schüttdichtewerte sollen dabei so niedrig wie möglich liegen; angestrebt werden Werte unter $0,4 g/cm^3 = 400 g/dm^3$. Unter "Schüttdichte" wird dabei das Schüttgewicht von 1 $dm^3$ Granulat in lose geschütteter Packung verstanden.

Die Kornfestigkeitswerte derartiger Granulate werden in der Bundesrepublik Deutschland nach DIN 4226 gemessen. Dabei wird die Gleichmäßigkeit der Kornfestigkeit der Korngruppen über 4 mm nach dem Zylinderverfahren bestimmt. Hierzu wird das Granulat nach Entfernen von Unter- und Überkorn lose in einen Stahlzylinder mit genormten Abmessungen eingefüllt. Mit Hilfe eines den Innenquerschnitt voll überdeckenden Stempels wird in einer Presse das Granulat innerhalb von etwa 100 Sekunden um 20 mm zusammengedrückt. Die Kraft, die für diese Stauchung erforderlich ist, wird als Druckwert D bezeichnet und in kN angegeben.

Für die Prüfung eines Leichtzuschlagstoffes, der auf Basis von Glas hergestellt ist, ist die sogenannte Raumbeständigkeit wesentlich. Diese Prüfung ist Bestandteil der amtlichen Güteüberwachung und wird ebenfalls nach DIN 4226 bestimmt (siehe DIN 4226, Teil 3, Abschnitt 6.2). Auch hierbei wird die Bestimmung am Granulat mit über 4 mm Korngröße ausgeführt. Von einer eng begrenzten Korngruppe ohne Unter- und Überkorn werden bestimmte Prüfmengen 24 Stunden bei 110 +/- 5°C getrocknet. Die Probe wird mindestens 3 Tage lang unter Wasser gelagert und dann in einen Autoklaven gebracht. Dieser wird anschließend etwa eine Stunde so aufgeheizt, daß ein Überdruck von 20 bar entsteht (Temperatur etwa 210-220°C). Dieser Druck wird 3 Stunden lang gehalten und dann die Temperatur langsam in etwa 1,5 Stunden durch Abkühlen auf etwa 20-40°C gesenkt. Danach wird die Probe 24 Stunden bei 110 +/- 5°C getrocknet, gewogen und der Durchgang durch das nächstkleinere Prüfsieb, das auf die untere Prüfkorngröße folgt, ermittelt. Der Durchgang wird in Gew% der getrockneten Prüfgutmenge angegeben. Maßgebend ist das Mittel von zwei Prüfungen.

Anstelle der Siebanalyse im Anschluß an die Autoklav-Behandlung kann auch die oben beschriebene Kornfestigkeit nach DIN 4226, Abschnitt 7.2 ermittelt werden. Als Erfahrungswert gilt, daß das Material die Prüfung auf Raumbeständigkeit im Autoklavenversuch bestanden hat, wenn die Kornfestigkeit des Prüfmaterials nach der Autoklav-Behandlung nicht geringer ist als vor der Autoklav-Behandlung.

Zur Herstellung von Schaumglas-Formkörpern, insbesondere Schaumglas-Granulat, wird nach EP-PS 0 170 978 so vorgegangen, daß zunächst eine Mischung aus

(a) fein gemahlenem Glas mit wenigstens 25 Gew% Alkalioxid und
(b) fein gemahlenem Glas mit weniger als 16 Gew% Alkalioxid

hergestellt wird. Diese Mischung wird, gegebenenfalls nach Zusatz von Verschäumungsmitteln und Füllstoffen mit Wasser angeteigt und gerührt. Dabei geht das alkalioxidreiche Glas in Lösung und schließt die alkalioxidärmere Komponente an der Teilchenoberfläche auf. Infolge dieser Reaktion tritt Ansteifung der Masse zu einer Schlempe ein. Die angesteifte Masse wird alsdann granuliert, getrocknet und bei erhöhter Temperatur verschäumt. Nach den Angaben der europäischen Patentschrift 0 170 978 soll dabei das Gewichtsverhältnis der Glassorten a:b = 1:21 bis 1:400 betragen. Nach der Verschäumungsbehandlung

EP 0 484 643 A1

liegt ein Granulat mit einem Raumgewicht von 100 bis 400 kg/m$^3$ = 100 bis 400g/dm$^3$ vor. Die Kornfestigkeitswerte des Granulates sind in der europäischen Patentschrift 0 170 978 nicht angegeben; sie reichen aber aus, um das Material für die Herstellung von Leichtbeton einsetzbar zu machen.

Der Erfindung liegt die Aufgabe zugrunde, die vorbekannten Verfahren zum Herstellen von Schaumglas-Formkörpern, insbesondere von Schaumglasgranulaten, dahingehend zu verbessern, daß Schaumglassorten mit hinreichend niedriger Rohdichte, jedoch erhöhter Kornfestigkeit und verbesserter Raumbeständigkeit entstehen.

Die Lösung dieser Aufgabe beruht auf der überraschenden Feststellung, daß eine erhebliche Verbesserung der genannten Eigenschaften dann eintritt, wenn bei der Herstellung von Schaumglas-Formkörpern das Glas von Entladunglampen eingesetzt wird. Als Entladungslampen kommen in erster Linie sogenannte Leuchtstoffröhren in Betracht. Es eignet sich aber auch das Glas von anderen Metalldampfentladungsröhren, beispielsweise Natriumdampf-Entladungsröhren, welche z.B. für die Straßenbeleuchtung eingesetzt werden. Nicht in Betracht kommen Quarzlampen, wie sie als UV-Strahler in Niederdruck- und Hochdruck-Entladungsröhren eingesetzt werden, die für medizinische oder kosmetische Körperbestrahlung, aber auch als Beleuchtungsquelle in Meßgeräten oder technischen Apparaturen, letztere beispielsweise für die Printplattenherstellung, verwendet werden.

Umfangreiche Versuche haben ergeben, daß bereits verhältnismäßig geringe Zusätze von Entladungslampenglas zur Ausgangsmischung bei der Herstellung von Schaumglas-Formkörpern beachtliche Verbesserungen der mechanischen Eigenschaften, insbesondere der Kornfestigkeit und der Raumbeständigkeit der so hergestellten Formkörper, ergeben. Optimal werden die Verbesserungen, wenn als Altglas eine Mischung aus 30 bis 100% Entladungslampenglas eingesetzt wird. Beachtliche bis gut beobachtbare Verbesserungen gibt es aber bereits auch bei kleineren Zusätzen bis herunter zu etwa 1 Gew%.

Analysen der mit Erfolg eingesetzten Glassorten haben ergeben, daß es vorteilhaft ist, wenn als Altglas ein Glas oder eine Glasmischung mit

- wenigstens 15 Gew% Gesamtalkalioxid und
- 4 bis 8 Gew% Gesamt-Erdalkalioxid

verwendet wird.

Die Summe "Gesamtalkalioxid" besteht aus den Prozentgehalten der $Na_2O$ und $K_2O$. Die Summe "Gesamt-Erdalkalioxid" besteht aus der Summe der Prozentgehalte an Magnesiumoxid, Kalziumoxid und Bariumoxid.

Als besonders vorteilhaft hat es sich erwiesen, wenn als Altglas ein Glas oder eine Glasmischung folgender Zusammensetzung verwendet wird:

| | |
|---|---|
| $SiO_2$ | 70 bis 75 Gew% |
| $Al_2O_3$ | 1 bis 2 Gew% |
| CaO | 3 bis 6 Gew% |
| MgO | 2 bis 4 Gew% |
| BaO | bis 1,0 Gew% |
| $Na_2O$ | 14 bis 16 Gew% |
| $K_2O$ | 0,5 bis 1,5 Gew% |
| Sonstiges | bis 0,5 Gew% |

mit der Maßgabe, daß die Summe der Bestandteile 100 Gew% beträgt. Unter "Sonstiges" werden Verunreinigungen verstanden, die in derartigen Gläsern häufig vorhanden sind, beispielsweise kleine Gehalte an $Fe_2O_3$.

Bei Versuchen hat sich gezeigt, daß Entladungslampenglas insbesondere Leuchtstoffröhrenglas, mit Alkalisilikat besonders leicht aufschließbar ist. Es ist nicht einmal erforderlich, das Alkalisilikat als Stückenglas einzubringen und dabei die erhöhte Reaktionsfreudigkeit des in Lösung gehenden Stückenglases auszunützen, wie dies bei ausschließlichem Einsatz von Flaschenglas, Fensterglas und ähnlichen Altglassorten der Fall ist. Das Alkalisilikat kann vielmehr auch alsfertig zu beziehendes und deshalb gealtertes Wasserglas, also als fertig vorliegende wässrige Alkalisilikatlösung eingesetzt werden.

Bei der Durchführung des Verfahrens ist es vorteilhaft, wenn die Korngröße des eingesetzten Entladungslampenglases zwischen 25 und 125 $\mu$m liegt. Die Gesamtmischung wird vorzugsweise so zusammengesetzt, daß die Alkalioxidgehalte so aufeinander abgestimmt werden, daß der Gesamtgehalt an Alkalioxid 14 bis 25 Gew% beträgt.

In aller Regel wird aus Kostengründen Natronwasserglas als Aufschlußmittel eingesetzt. Es ist aber auch Kaliwasserglas verwendbar oder eine Mischung dieser beiden Wasserglassorten.

3

Die vorgeschlagene Verfahrensweise führt, wie gesagt, zu Schaumglas-Formkörpern, insbesondere Schaumglas-Granulaten mit verbesserter Rohdichte, deutlich verbesserter Kornfestigkeit sowie verbesserter Raumbeständigkeit. Das Verfahren hat aber auch noch einen weiteren Aspekt, der darin besteht, eine wirtschaftlich günstige Verwendung von Leuchtstoffröhrenglas, sowie dem Glas ähnlicher Lampen gefunden zu haben. Quecksilberdampf- und andere Metalldampfentladungsröhren finden bekanntlich in großem Umfange Verwendung, da diese Lichtquellen eine bedeutend bessere Ausnützung der elektrischen Energie gestatten als die herkömmlichen Glühlampen. Außerdem haben solche Gas- und Dampfentladungsröhren eine gegenüber Glühlampen erhöhte Lebensdauer. Schließlich erschöpfen sich aber auch solche Lampen und müssen durch neue ersetztwerden, so daß das Problem der Abfallbeseitigung entsteht. Dieses Problem ist deshalb beachtlich, weil die Dampfentladungsröhren jeweils eine kleine Menge des in Betracht kommenden Metalles, also beispielsweise Quecksilber, und außerdem einen Anteil an sogenannten Leuchtstoffen enthalten. Bei den Leuchtstoffen handelt es sich um eine eigens zusammengesetzte Oxidmischung aus Erdalkalioxiden sowie Oxiden von seltenen Erden, wie beispielsweise Cer, Ythrium, Lanthan u.a. Bei der Entsorgung verbrauchter Leuchtstofflampen werden diese beispielsweise unter Wasser mechanisch zertrümmert, wobei sowohl die Quecksilberanteile wie auch die Anteile an Leuchtstoff von den entstehenden Glasscherben abgeschwemmt werden. Die erwähnten Wertstoffe werden von der übrigen Masse separiert und einer erneuten Verwendung zugeführt. Nach Abtrennen der Metallteile (Anschlußsockel) verbleibt als Hauptanteil Glasbruch, eben jenes Glas, aus welchem die Röhre bestanden hat. Dieser Glasbruch stellt nun das Rohmaterial für die Herstellung verbesserter Schaumglas-Formkörper, insbesondere Schaumglas-Granulaten, dar.

Zur näheren Erläuterung des angegebenen Verfahrens wird im folgenden ein Rezepturbeispiel angegeben. Als herkömmliches Altglas wurde Flaschenglas mit 12,8 Gew% $Na_2O$ und 0,8 Gew% $K_2O$ = 13,1 % Alkalioxid eingesetzt. Als Entladungslampenglas wurde das Glas von Leuchtstoffröhren verwendet, welches von allen Quecksilber- und Leuchtstoffanteilen befreit war und 16,0 Gew% $Na_2O$ sowie 1,2 Gew% $K_2O$ = 17,2 Gew% Alkali, sowie darüber hinaus 5,4 Gew% CaO, 2,75 Gew% MgO enthielt. Ferner wurde Stückenglas mit 33 Gew% $Na_2O$ eingesetzt.

Die Ausgangsmaterialien wurden in herkömmlicher Weise fein gemahlen, so daß eine Korngröße von weniger als 125 μm vorlag. Zum Ansetzen der Rezeptur wurde Wasser vorgelegt, Stückenglas, Braunstein und Zucker eingetragen und als letztes die benötigte Menge Altglas zugesetzt. Die Masse wurde sodann bis zum Ansteifen gerührt, granuliert und getrocknet. Nach dem Trocknen wurde das Granulat durch Sieben in folgende Korngrößenbereiche aufgeteilt:

| Bereich 1 | 0,5 bis 1 mm |
|-----------|--------------|
| Bereich 2 | 1,1 bis 2 mm |
| Bereich 3 | 2,1 bis 4 mm |
| Bereich 4 | über 4 mm |

Für die Weiterverarbeitung wurde die Kornfraktion 2,1 bis 4 mm im Drehrohrofen verschäumt. Anstelle der genannten Schäumungsmittel Zucker und Braunstein können auch andere Schäumungsmittel eingesetzt werden. Für helle Sorten eignen sich Mischungen aus Soda, Harnstoff und $H_2O_2$.

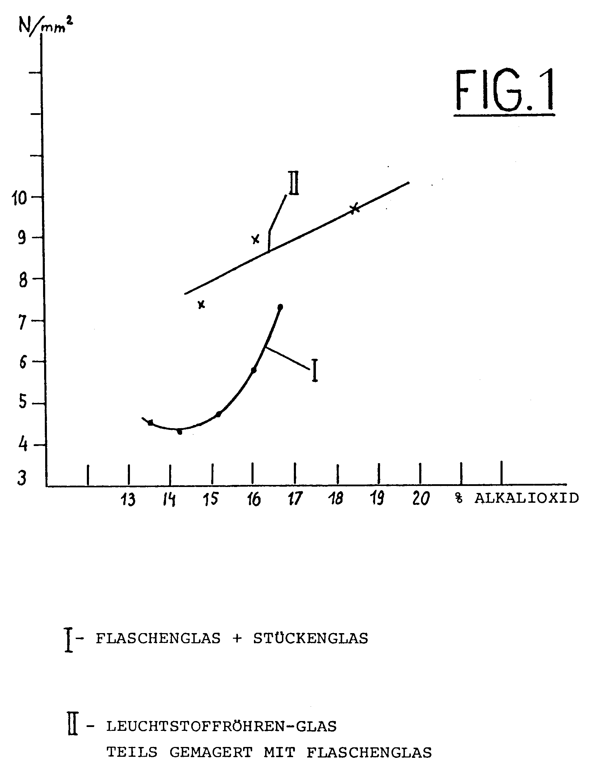

Einzelheiten der Rezepturzusammensetzung sowie der erhaltenen Eigenschaften des Granulates gehen aus Tabelle 1 hervor. Es ist erkennbar, daß sowohl die Rohdichte mit steigendem Alkalioxidgehalt abnimmt, wie auch die Kornfestigkeit entsprechend zunimmt. Das Diagramm in Fig. 1 zeigt dies graphisch, wobei Kurve I Rezepturen aus Flaschenglas und Stückenglas und Kurve II Rezepturen aus Leuchtstoffröhrenglas zeigt, welches teilweise mit Flaschenglas gemagert ist. Das Diagramm läßt erkennen, daß die zur Kurve II gehörenden Werte, welche sämtlich Leuchtstoffröhrenglas enthalten, zu höheren Kornfestigkeiten führen. Dargestellt im Diagramm sind die Kornfestigkeiten nach Autoklav-Behandlung.

| Rezeptur | Glas-Anteile *) in Gew% | | | Alkali-Gehalt in Gew% | | | | Eigenschaften | | | |
|---|---|---|---|---|---|---|---|---|---|---|---|
| jeweils + 0,4 Gew% Zucker + 0,4 Gew% MnO$_2$ | Altglas Flaschen | Altglas LS-Röhren | Stücken-glas | Flaschen-glas | LS-Röhren-glas | Stücken-glas | Gesamt | Brenn-temp. °C | Rohdichte g/cm | Kornfestigkeit vor kN | nach Autoklav-Behandlung kN |
| jeweils 100% Flaschenglas | | | | | | | | | | | |
| Ansatz 1 | 97 | -- | 3 | 12,7 | -- | 1 | 13,7 | 870 | 185 | 9,5 | 4,5 (47%) |
| Ansatz 2 | 95 | -- | 5 | 12,4 | -- | 1,7 | 14,1 | 865 | 175 | 8,2 | 4,4 (54%) |
| Ansatz 3 | 91 | -- | 9 | 11,9 | -- | 3 | 14,9 | 860 | 168 | 7,4 | 4,6 (62%) |
| Ansatz 4 | 86 | -- | 14 | 11,4 | -- | 4,6 | 16,0 | 855 | 166 | 7,2 | 5,8 (81%) |
| Ansatz 5 | 82 | -- | 18 | 10,7 | -- | 6,0 | 16,7 | 850 | 165 | 7,2 | 7,1 (98%) |
| jeweils 70% Flaschenglas + 30% LSR | | | | | | | | | | | |
| Ansatz 6 | 66 | 28 | 4,5 | 8,6 | 4,8 | 1,5 | 14,9 | 840 | 160 | 7,3 | 7,2 (98%) |
| Ansatz 7 | 64 | 27 | 9 | 8,4 | 4,6 | 3 | 16,0 | 835 | 145 | 6,5 | 8,8 (135%) |
| jeweils 100% LSR | | | | | | | | | | | |
| Ansatz 8 | -- | 91 | 9 | -- | 15,6 | 3 | 18,6 | 830 | 140 | 6,6 | 9,3 (141%) |

Anmerkung:
LSR = Leuchtstoffröhrenglas

## Tabelle 1

16. November 1990

EP 0 484 643 A1

**Patentansprüche**

1. Verfahren zum Herstellen von Schaumglas-Formkörpern aus zerkleinertem Altglas unter Zusatz von wenigstens einem Treibmittel, Formen der Masse und Verschäumen bei erhöhter Temperatur,
   dadurch gekennzeichnet,
   daß als Altglas ganz oder teilweise das zerkleinerte Glas von Entladungslampen, insbesondere Leuchtstoffröhrenglas, eingesetzt wird.

2. Verfahren nach Anspruch 1,
   dadurch gekennzeichnet,
   daß als Altglas eine Mischung von 1 bis 100 Gew% Entladungslampenglas, Rest sonstiger Glasbruch eingesetzt wird.

3. Verfahren nach Anspruch 1,
   dadurch gekennzeichnet,
   daß als Altglas eine Mischung aus 30 bis 100 Gew% Entladungslampenglas, Rest sonstiger Glasbruch, eingesetzt wird.

4. Verfahren nach Anspruch 1,2 oder 3,
   dadurch gekennzeichnet,
   daß die Korngröße des eingesetzten Entladungslampenglases 5 ... 125 $\mu$m beträgt.

5. Verfahren nach einem der vorausgehenden Ansprüche,
   dadurch gekennzeichnet,
   daß die Alkalioxidgehalte der Gemisch-Komponenten so aufeinander abgestimmt werden, daß der Gesamtgehalt an Alkalioxid 14 bis 25 Gew% beträgt.

6. Verfahren nach einem der vorausgehenden Ansprüche,
   dadurch gekennzeichnet,
   daß das Alkalisilikat in Form von Stückenglas oder Wasserglas zugesetzt wird.

7. Verfahren nach einem der vorausgehenden Ansprüche,
   dadurch gekennzeichnet,
   daß als Altglas ein Glas oder eine Glasmischung mit
   - wenigstens 15 Gew% Gesamt-Alkalioxid und
   - 4 bis 8 Gew% Gesamt-Erdalkalioxid
   verwendet wird.

8. Verfahren nach einem der vorausgehenden Ansprüche,
   dadurch gekennzeichnet,
   daß als Altglas ein Glas oder eine Glasmischung mit folgender Zusammensetzung verwendet wird:

| | |
|---|---|
| $SiO_2$ | 70 bis 75 Gew% |
| $Al_2O_3$ | 1 bis 2 Gew% |
| CaO | 3 bis 6 Gew% |
| MgO | 2 bis 4 Gew% |
| BaO | bis 1,0 Gew% |
| $Na_2O$ | 14 bis 16 Gew% |
| $K_2O$ | 0,5 bis 1,5 Gew% |
| Sonstiges | bis 0,5 Gew% |

mit der Maßgabe, daß die Summe aller Bestandteile 100 Gew% beträgt.

# FIG.1

I - FLASCHENGLAS + STÜCKENGLAS

II - LEUCHTSTOFFRÖHREN-GLAS
TEILS GEMAGERT MIT FLASCHENGLAS

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | EP-A-0 170 978 (DENNERT)<br>* das ganze Dokument *<br>--- | 1-8 | C03C11/00<br>C03C1/00 |
| D,A | EP-A-0 052 693 (DENNERT)<br>* das ganze Dokument *<br>--- | 1-8 | |
| A | DE-A-3 909 380 (PD PHYSIK+DATENTECHNIK)<br>* Zusammenfassung *<br>--- | 1-8 | |
| A | WORLD PATENTS INDEX LATEST<br>Section Ch, Week 9047,<br>Derwent Publications Ltd., London, GB;<br>Class L, AN 90-353754<br>& SU-A-1 537 654 (PETROV) 23. Januar 1990<br>* Zusammenfassung *<br><br>----- | 1-8 | |

| RECHERCHIERTE SACHGEBIETE (Int. Cl.5) |
|---|
| C03C<br>H01J |

Der vorliegende Recherchenbericht wurde für alle Patentansprüche erstellt

| Recherchenort | Abschlußdatum der Recherche | Prüfer |
|---|---|---|
| DEN HAAG | 04 FEBRUAR 1992 | VAN BOMMEL L. |